# EUROPÄISCHE PATENTSCHRIFT

(11) **EP 3 164 730 B1**
(45) Veröffentlichungstag und Bekanntmachung des Hinweises auf die Patenterteilung: **31.10.2018**
(21) Anmeldenummer: 15747370.3
(22) Anmeldetag: 23.06.2015
(51) Int. Cl.: G01S 7/03, G01S 13/04, G01S 13/88, H01Q 21/00, H01Q 21/06, B65G 13/00, H01Q 13/12

(54) **SENSOR FÜR EINE ROLLENBAHN UND VERFAHREN ZUM ERKENNEN VON AUF EINER ROLLENBAHN BEFINDLICHEN OBJEKTEN**
SENSOR FOR A ROLLER CONVEYOR AND METHOD FOR DETECTION OF OBJECTS ON A ROLLER CONVEYOR
CAPTEUR POUR UN CONVOYEUR À GALETS ET PROCÉDÉ DE DÉTECTION D'OBJETS SUR UN CONVOYEUR À GALETS

(30) Priorität: 04.07.2014 DE 102014109402
(43) Veröffentlichungstag der Anmeldung: 10.05.2017
(73) Patentinhaber: Sick AG, 79183 Waldkirch (DE)
(72) Erfinder: PRINZ, Oliver, 79104 Freiburg (DE); KERN, Simon, 79348 Freiamt (DE)
(86) Internationale Anmeldenummer: PCT/DE2015/100255
(87) Internationale Veröffentlichungsnummer: WO 2016/000684

(56) Entgegenhaltungen:
- EP-A1- 0 568 518
- EP-A1- 1 708 119
- EP-A1- 2 468 429
- WO-A1-99/21144
- DE-A1-102010 020 531
- GB-A- 1 496 138
- US-A- 2 601 610
- US-A- 4 189 730
- US-A- 5 485 160
- US-A1- 2004 173 440

## Beschreibung

Die Erfindung betrifft einen Sensor für eine Rollenbahn und ein Verfahren zum Erkennen von auf einer Rollenbahn befindlichen Objekten nach dem Oberbegriff von Anspruch 1 beziehungsweise 15.

Rollenbahnen werden in der Regel als Rollenförderer in der Lager- und Fördertechnik eingesetzt. Einige der Rollen besitzen einen aktiven Antrieb, der sie in Rotation versetzt. Die übrigen passiven Rollen können über Bänder von den aktiven Rollen mitbewegt werden, oder die in Bewegung versetzten Objekte überbrücken solche Rollen aufgrund der Trägheit. Um den Materialfluss zu steuern, soll die Rollenbahn an bestimmten Positionen der Förderstrecke auf Anwesenheit von Objekten überwacht werden. Dazu sind verschiedenste Sensoren bekannt, wie optische, magnetische, induktive oder kapazitive Sensoren, die am entsprechenden Ort der Förderstrecke angebracht werden, um das Fördergut auf der Rollenbahn zu erfassen.

Die Montage derartiger Sensoren mit geeigneter Befestigungstechnik und Verkabelung zum Anschluss an eine Energieversorgung und ein Kommunikationsnetz, also an eine Steuereinheit oder in Kettenschaltung an weitere Sensoren, erfordert einen erheblichen Aufwand, zusätzlichen Platzbedarf sowie eine Einzeljustage der zahlreichen separat montierten Sensoren. Außerdem sind extern montierte Sensoren prinzipiell anfällig gegen mechanische Beeinträchtigungen durch die Umgebung, wie Verschmutzung oder Beschädigung der Detektionsflächen. Das gilt insbesondere bei optischen Sensoren wie Lichtschranken oder Lichtgittern, die seitlich oder von unten die Rollenbahn beobachten. Der Wartungsaufwand wird dadurch erhöht, und ferner wird eine robuste Gehäuseausführung zum mechanischen Schutz der Sensoren notwendig.

Daher wird im Stand der Technik, etwa der DE 101 31 019 A1, vorgeschlagen, eine Sensorik direkt in Rollen einer Rollenbahn zu integrieren. Die dabei genannten Technologien sind aber lediglich ohne Details aufgelistet und lassen jeweils gravierende Probleme ungelöst. Beispielsweise leidet die Verfügbarkeit optischer Sensoren häufig wegen Verunreinigungen. Andere Prinzipien, wie kapazitive oder induktive Sensoren, können Schwankungen des Sensorsignals aufgrund diverser Fremdeinflüsse, wie Unregelmäßigkeiten der Bewegung der Rolle durch Lagerspiel, Temperaturänderungen, Abnutzung oder Verschmutzung, nicht zuverlässig von den Effekten durch ein Objekt auf der Rolle unterscheiden. Darüber hilft auch nicht hinweg, wenn beispielsweise bei kapazitiven Sensoren Rollen aus Kunststoff ausgeblendet werden sollen, denn es wird nicht erläutert, wie das erreicht werden könnte. Zu einer ebenfalls genannten Ausführungsform mit einem Radar- oder Mikrowellensender bleibt außer der Erwähnung dieser Elemente das Funktionsprinzip gänzlich offen.

Die DE 20 2007 015 529 U1 offenbart eine Rolle für eine Rollenbahn mit einem integrierten kapazitiven Sensor, der zusätzlich auf einer der Förderseite abgewandten Seite einen Referenzsensor vorsieht. Ein Schaltsignal bei einem über die Rolle geförderten Objekt wird dann aus einem Differenzsignal zwischen dem Signal des eigentlichen Sensors und des Referenzsensors bestimmt. Außerdem wird vorgeschlagen, in Längsrichtung der Rolle mehrere Sensoren hintereinander anzuordnen.

US5485160 und GB1496138 offenbaren Radar im Zusammenhang mit Rollenbahnen.

EP1708119 A1 und DE10 2010 020 531 A1 beschreiben RFID Systeme im Zusammenhang mit Förderern.

EP2468429 A1 beschäftigt sich mit der Geschwindigkeitsmessung eines Walzgutes.

US2601610 und US4189730 erklären Schlitzantennen in metallischen Zylindern.

EP0568518 A1 offenbart einen Radarsensor für ein Tor.

US2004/0173440 A1 befasst sich mit einem Radarsensor in einer Rolle für eine Rollenbahn.

WO99/21144 offenbart eine Rahmenantenne mit einem RFID Leser in einer Rolle einer Rollenbahn.

Es ist daher Aufgabe der Erfindung, eine zuverlässige Anwesenheitserkennung von Objekten auf einer Rollenbahn zu ermöglichen.

Diese Aufgabe wird durch einen Sensor für eine Rollenbahn und ein Verfahren zum Erkennen von auf einer Rollenbahn befindlichen Objekten nach Anspruch 1 beziehungsweise 10 gelöst. Das Sensorelement des Sensors ist in eine Rolle der Rollenbahn integriert. Die Erfindung geht nun von dem Grundgedanken aus, für die Erkennung von Objekten ein Hochfrequenzsignal zu nutzen, das von einem Sender über ein Antennenelement in den Freiraum oberhalb der Rollenbahn abgestrahlt und dann über das Antennenelement in einem Empfänger empfangen wird. Objekte in dem Bereich oberhalb der Rollenbahn beeinflussen das Hochfrequenzsignal, und dieser Effekt wird zur Anwesenheitserkennung der Objekte genutzt. Sender und Empfänger können gemeinsam als Transceiver ausgebildet sein. Es ist außerdem denkbar, dass das Hochfrequenzsignal mit verschiedenen Einzelantennen des Antennenelements abgestrahlt und empfangen wird.

Die Erfindung hat den Vorteil, dass durch Integration in die Rolle ein nur minimaler Montageaufwand ohne zusätzlichen Platzbedarf ermöglicht wird, bei dem zugleich der Sensor vor äußeren Einflüssen geschützt ist. Dabei ist der Sensor einfach aufgebaut und kommt mit nur geringem Messaufwand aus. Im Gegensatz zu optischen Sensoren ist der auf Hochfrequenzsignalen basierende Sensor unempfindlich gegen Staub und Verunreinigungen. So wird eine besonders robuste, zuverlässige und einfache Anwesenheitserkennung für Objekte auf einer Rollenbahn möglich.

Weitere Elemente des Sensors, wie Sender, Empfänger und Auswertungseinheit, sind bevorzugt in die Rolle oder in einen Rahmen der Rollenbahn integriert. Am kompaktesten ist ein insgesamt in die Rolle integriertes System, aber auch bei Integration des Sensorelements oder anderer Elemente des Sensors in einen Rahmen der Rollenbahn werden zusätzliche, freiliegende Elemente vermieden und der Platzbedarf verringert. Es ist lediglich noch eine Anschlussleitung für die Versorgung und den Datenanschluss erforderlich. Sogar diese Anschlussleitung kann noch durch drahtlose Kommunikation wie Funk beziehungsweise drahtlose oder autonome Versorgung vermieden werden.

Das Antennenelement weist in einem Vergleichsbeispiel eine Hohlleiterantenne auf. Hierbei wird das Hochfrequenzsignal zunächst in einem metallisch leitenden Hohlraum geführt und dann an Öffnungen der metallischen Hülle abgestrahlt. Dann hat nicht ein metallischer Dipol, sondern die jeweilige Öffnung die eigentliche Antennenfunktion.

In dem Vergleichsbeispiel besonders bevorzugt ist die Rolle als Hohlleiterantenne ausgebildet, indem die Rolle eine metallische Hülle mit Öffnungen aufweist. An den Öffnungen wird das Hochfrequenzsignal abgestrahlt und kann mit den zu erkennenden Objekten wechselwirken. Für einen großen Erfassungsbereich sind deshalb vorzugsweise Öffnungen über mindestens einen großen Teil oder sogar die volle Länge des Sensorelements vorgesehen. In radialer Richtung hängt eine geeignete Anordnung der Öffnungen davon ab, ob sich das Sensorelement als Rolle mitdreht oder nicht. Im mitbewegten Fall sollten die Öffnungen vorzugsweise über den Umfang verteilt sein, da sonst periodisch das Sensorelement einer Anwesenheitserkennung im Weg ist. Im ruhenden Fall genügt es, Öffnungen in Richtung der zu erkennenden Objekte anzubringen. Eine besonders geeignete Öffnungsform haben Schlitze. Es ist möglich, im Inneren der Hohlleiterantenne ein Dielektrikum vorzusehen. Ihre metallische Hülle macht eine Hohlleiterantenne als Rolle besonders widerstandsfähig und langlebig.

Das Antennenelement weist in dem Vergleichsbeispiel bevorzugt mehrere Hohlleiterantennenelemente auf. Beispielsweise werden mehrere dünne Hohlleiterantennenelemente in das Sensorelement und insbesondere in eine Rolle eingebracht. Eine metallische Hülle des Sensorelements ist dazu wieder durch Öffnungen unterbrochen, die in diesem Fall nicht abstrahlend wirken müssen, sondern lediglich das bereits von den Hohlleiterelementen abgestrahlte Feld passieren lassen. Alternativ gibt es keine gemeinsame metallische Hülle, beispielsweise indem die mehreren Hohlleiterantennenelemente in ein Dielektrikum eingebettet werden. Die Hochfrequenzsignale der mehreren Hohlleiterantennenelemente können einzeln ausgewertet und die Ergebnisse erst nachträglich auf algorithmischer Ebene zusammengefasst werden. Denkbar ist auch, das Hochfrequenzsignal mit einem Splitter beziehungsweise Kombinierer sendeseitig auf die mehreren Hohlleiterantennenelemente insbesondere mit ähnlicher radialer Richtung zu verteilen und empfangsseitig zusammenzufassen.

Das Sensorelement weist erfindungsgemäß mindestens eine Antennenstruktur an seiner Oberfläche auf. Die Antennenstruktur kann sich dabei sowohl auf als auch unter der Oberfläche des Sensorelements und insbesondere der Rolle befinden, also mit einem Dielektrikum bedeckt sein. Bezüglich der Verteilung von Antennenstrukturen über die Längserstreckung und den Umfang des Sensorelements gelten die obigen Ausführungen zur Verteilung von Öffnungen einer Hohlleiterantenne entsprechend.

Die Antennenstruktur weist erfindungsgemäß mindestens eine Patchantenne auf. Das kann besonders kompakt an der Oberfläche angeordnet werden und bietet sehr viele Freiheitsgrade für das Antennendesign. Prinzipiell sind auch andere Antennenbauformen möglich, aber zumindest in eine Rolle deutlich schwieriger zu integrieren, und außerhalb einer Rolle entstehen möglicherweise Aufbauten, die in anderen Ausführungsformen vermieden werden konnten. Mehrere Patchantennen können einzeln oder gruppenweise angesteuert werden, wobei die Gruppen vorzugsweise in einer ähnlichen radialen Richtung zusammengefasst werden, um annähernd zeitgleich auf ein Objekt anzusprechen.

Die Auswertungseinheit ist bevorzugt dafür ausgebildet, Objekte anhand von Reflexionen des Hochfrequenzsignals zu erkennen. Das bedeutet vorzugsweise die Messung des durch das detektierte Objekt rückgestreute Signals. Trifft das abgestrahlte Hochfrequenzsignal auf Objekte, wird es zumindest teilweise reflektiert. Damit ergibt sich als Empfangssignal ein Zeitverlauf des Hochfrequenzsignals mit den Objekten entsprechenden Echos. Dieser Kurvenzug kann abgetastet und dann digital in seinem gesamten Informationsgehalt bewertet, aber auch analog beispielsweise anhand von Schwellen ausgewertet werden.

Die Auswertungseinheit ist bevorzugt dafür ausgebildet, eine Signallaufzeit des Hochfrequenzsignals bis zu einer Objektkante und daraus die Lage eines erkannten Objekts auf der Rollenbahn zu bestimmen. Das Hochfrequenzsignal liefert mehr Messinformationen als die bloße Anwesenheit, die beispielsweise durch Bestimmung einer Signallaufzeit erfasst wird, um Objektkanten zu lokalisieren. Das ergibt eine Positions- und Größeninformation des Objekts. Durch Mehrfachmessung mit mehreren längs der Rollenbahn angeordneten Sensoren oder Sensorelementen und/oder durch wiederholte Messung unter Berücksichtigung der Fördergeschwindigkeit können diese Positions- und Größeninformationen verfeinert werden.

Die Auswertungseinheit ist bevorzugt dafür ausgebildet, die Amplitude, Frequenz und/oder Phase des Hochfrequenzsignals sendeseitig zu modulieren und diese Modulation empfangsseitig auszuwerten. Damit kann insbesondere ein Signallaufzeitverfahren realisiert werden, beispielsweise ein Phasenverfahren mit Bestimmung des Phasenversatzes, ein Pulsverfahren oder ein FMCW-Verfahren (Frequency Modulated Continuous Wave).

Das Antennenelement strahlt bevorzugt das Hochfrequenzsignal zumindest mit einem Anteil in einer Bewegungsrichtung der Objekte auf der Rollenbahn ab, und die Auswertungseinheit ist dafür ausgebildet, die Objekte anhand einer geänderten Frequenz des Hochfrequenzsignals aufgrund einer Dopplerverschiebung zu erfassen. Die Dopplerverschiebung tritt nur auf, wenn abgestrahlte Hochfrequenzsignale zumindest Anteile in Bewegungsrichtung der Objekte aufweisen. Dazu können die Antennenkeulen ein wenig oder vollständig in die Bewegungsrichtung gekippt werden. Über den Dopplereffekt wird vorzugsweise nicht nur die Anwesenheit, sondern auch die Geschwindigkeit der Objekte gemessen.

Das Antennenelement ist bevorzugt dafür ausgebildet, eine bewegliche Antennenkeule zu erzeugen, um einen Bereich der Rollenbahn dynamisch abzutasten. Der Sensor wirkt damit über einen deutlich vergrößerten Erfassungsbereich wie ein tastendes Radar mit oder ohne Entfernungsbestimmung. Die Bewegung der Antennenkeule wird, obwohl dies prinzipiell denkbar wäre, vorzugsweise nicht durch mechanische Bewegung der Antenne erreicht, sondern durch elektronische Ansteuerung mehrere Einzelantennen etwa durch Zeitmultiplexing oder phasenversetzte Ansteuerungssignale. Eine Ausführungsform als tastendes Radar ist besonders für die Montage am oder die Integration in den Rahmen geeignet.

Die Auswertungseinheit ist bevorzugt dafür ausgebildet, vorab ein Kalibrationssignal in Abwesenheit von Objekten zu bestimmen und dann für die Erkennung von Objekten zu berücksichtigen. Damit werden in einer Art Leerkalibration diejenigen Einflüsse auf das Hochfrequenzsignal erfasst, die nicht von einem zu erkennenden Objekt verursacht sind. Sie werden dann im Betrieb in einfacher Weise durch Abziehen des Kalibrationssignals von dem jeweiligen empfangenen Hochfrequenzsignal berücksichtigt. Dieses Vorgehen impliziert einen Referenzvergleich. Verbleiben nach dem Abziehen des Kalibrationssignals signifikante Unterschiede zu Null, so kann auf die Anwesenheit eines Objekts geschlossen werden.

Die Auswertungseinheit ist noch bevorzugter dafür ausgebildet, das Kalibrationssignal im Betrieb anhand einer Historie von Hochfrequenzsignalen zu bestimmen oder anzupassen. Hier erfolgt also die Leerkalibration ohne Objekt nicht nur anfänglich, sondern dynamisch. Letztlich handelt es sich vorzugsweise um ein Filter mit Tiefpasseigenschaften, das also schnelle Änderungen durch Objekte und weit zurückliegende Einflüsse auf das Hochfrequenzsignal vergisst. Die Filterparameter sollten so eingestellt sein, dass langsam bewegte Objekte oder Objekte im vorübergehenden Stau noch keine Anpassung auslösen, sondern nur langfristige Effekte wie Ablagerungen an der Rolle.

Die Auswerteeinheit ist bevorzugt dafür ausgebildet, empfangene Signale zu digitalisieren und die weitere Signalauswertung in FPGAs und/oder Mikrocontrollern durchzuführen. Im Speziellen wird eine Transformation der digitalisierten Signale aus dem Zeitbereich in den Frequenzbereich vorgenommen, wo die weitere Auswertung stattfindet. Nach einer Vorverarbeitung, die die Normierung der Signale vornimmt, werden störende Einflüsse durch speziell angepasste Filter unterdrückt. Anschließend werden die Objekte detektiert. Hierzu wird vorzugsweise ein Detektor verwendet, der eine Detektionsschwelle adaptiv einstellt. Die bekannten Objekte werden in Ihrem Abstand verfolgt, um die Wahrscheinlichkeit der Detektion von nicht vorhandenen Objekten zu minimieren.

In vorteilhafter Weiterbildung ist eine Rolle mit einem darin integrierten erfindungsgemäßen Sensor vorgesehen. Diese Rolle kann einen eigenen Antrieb aufweisen, also eine aktive Rolle sein. Dann nutzt der Sensor vorzugsweise die Versorgungs- und Steuerungsleitungen dieses Antriebs mit. Der Sensor kann aber auch in eine passive Rolle ohne eigenen Antrieb eingesetzt sein. Dann benötigt der Sensor eigene Anschlüsse oder versorgt sich und kommuniziert drahtlos. Denkbar ist auch, den Sensor mit einer Batterie oder einer eigenen Energieerzeugung aus der Drehbewegung auszurüsten.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Draufsicht auf eine Rollenbahn mit einem in eine Rolle integrierten Sensor zur Anwesenheitserkennung von Objekten auf der Rollenbahn;
- Fig. 2: eine Draufsicht auf eine Rollenbahn mit einem Sensor zur Anwesenheitserkennung von Objekten, dessen Sensorelement zwischen den Rollen angeordnet ist;
- Fig. 3: eine Blockdarstellung eines Sensors mit einer Hohlleiterantenne;
- Fig. 4: eine Blockdarstellung eines Sensors mit einem Antennenelement, das an seiner Oberfläche mehrere Antennenstrukturen aufweist;
- Fig. 5: eine Draufsicht auf eine Rollenbahn mit einem in deren Rahmen integrierten Sensor zu Anwesenheitserkennung von Objekten auf der Rollenbahn;
- Fig. 6: eine Draufsicht auf einen Sensor ähnlich Figur 5, jedoch mit Antennenstrukturen anstelle einer Hohlleiterantenne und verkippten Antennenkeulen;
- Fig. 7: eine Seitenansicht auf eine Ausführungsform eines in eine Rolle integrierten Sensors mit verkippter Antennenkeule; und
- Fig. 8: eine Draufsicht auf eine Rollenbahn mit einem Sensor, der eine schwenkbare Antennenkeule zur Abtastung eines Bereichs auf der Rollenbahn aufweist.

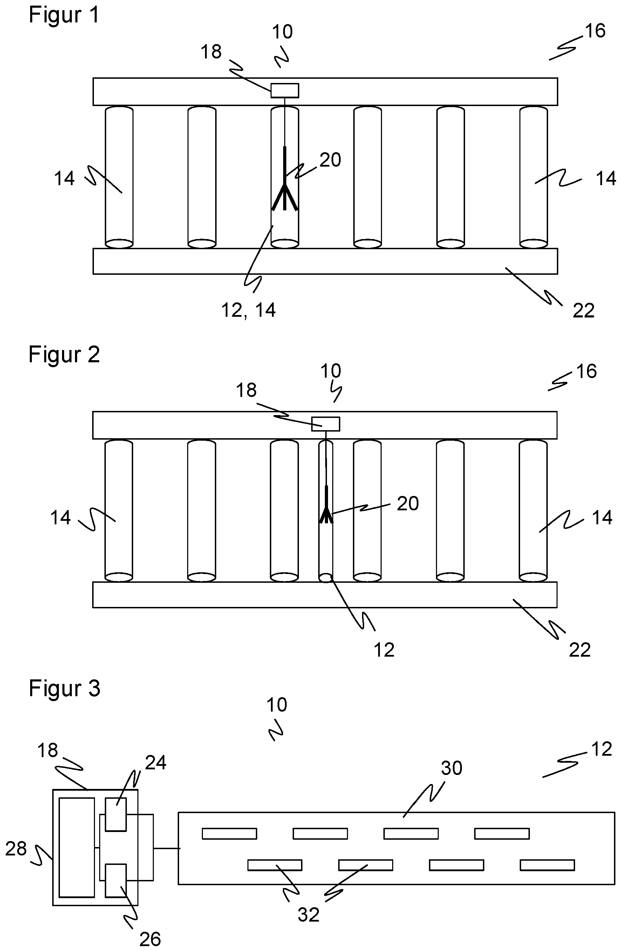

Figur 1 zeigt eine Draufsicht auf einen Sensor 10, dessen Sensorelement 12 in eine Rolle 14 einer Rollenbahn 16 integriert ist. Die Rollen 14 drehen sich aktiv oder passiv durch Mitbewegung mit einem nicht dargestellten Objekt, das sich längs der Rollenbahn 16 bewegt. Der Sensor 10 weist einen Sensorkopf 18 auf, dessen Elemente weiter unten anhand der Figur 3 näher erläutert werden. Das Sensorelement 12 weist mindestens eine Antenne 20 auf, die in die Rolle 14 integriert oder von der Rolle 14 gebildet ist. Der Sensorkopf 18 ist in der Ausführungsform gemäß Figur 1 in einen Rahmen 22 der Rollenbahn 16 integriert. In anderen Ausführungsformen ist der Sensorkopf 18 ebenfalls in die Rolle 14 eingebaut.

Figur 2 zeigt eine Draufsicht auf ein Vergleichsbeispiel, wo das Sensorelement 12 ein separates Bauteil ist, das zwischen den Rollen 14 insbesondere parallel dazu angeordnet ist. In seinem Aufbau kann das separate Sensorelement 12 einer Rolle 14 ähneln, also ebenfalls als Kreiszylinder und aus gleichen Materialien hergestellt sein. Das separate Sensorelement 12 dreht sich aber nicht unbedingt mit, sondern kann auch drehfest in dem Rahmen 22 gelagert sein und einen anderen Durchmesser aufweisen als eine Rolle 14.

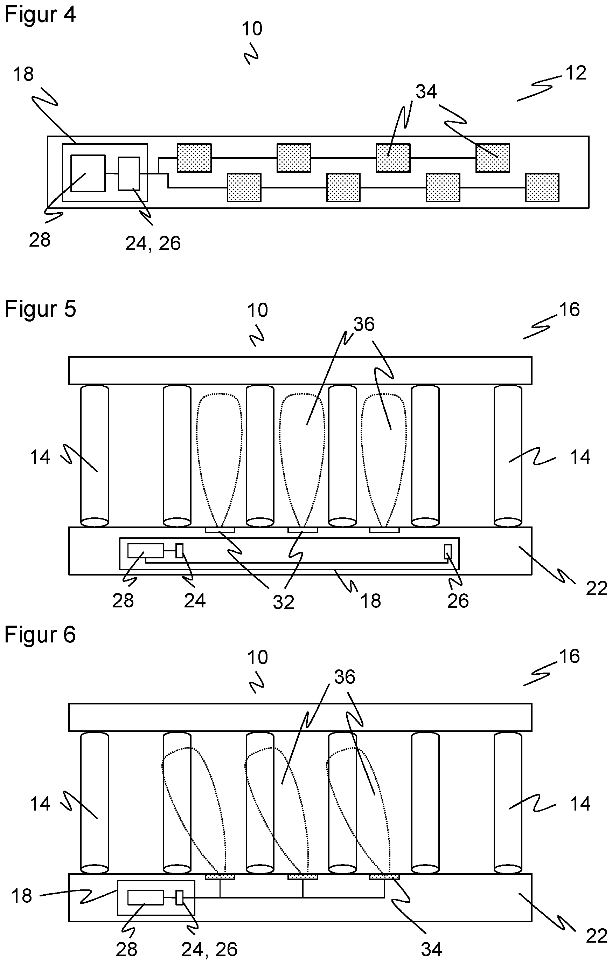

Figur 3 zeigt eine Blockdarstellung einer Ausführungsform des Sensors 10. Der Sensorkopf 18 weist einen Sender 24, einen Empfänger 26 sowie eine damit verbundene Steuer- und Auswertungseinheit 28 auf. Sender 24 und Empfänger 26 können gemeinsam als Transceiver ausgebildet sein. Die Kopplung auf die hier in einem Vergleichsbeispiel als Hohlleiterantenne 30 ausgebildete Antenne 20 erfolgt beispielsweise kapazitiv oder direkt durch ein Verbindungsstück. Eine alternative Ausführungsform wäre, eine getrennte Sende- und Empfangsantenne in das Sensorelement zu integrieren. Die als Sensorelement 12 fungierende Hohlleiterantenne 30 kann wie in Figur 1 in eine Rolle 14 integriert, wie in Figur 2 zwischen Rollen 14 oder wie später noch anhand der Figuren 5 und 6 illustriert, an der Rollenbahn 16 angeordnet und insbesondere in deren Rahmen 22 integriert sein. Beispielsweise ist eine Rolle 14 der Rollenbahn als Rundhohlleiterantenne ausgebildet, die in alle Richtungen strahlt, oder eine Antenne aus einem Rund- oder Rechteckhohlleiter wird zwischen den Rollen 14 angeordnet. Eine weitere Option ist, mehrere dünne Hohlleiterantennen in das Sensorelement 12 einzulegen, so dass die Richtungen getrennt voneinander gespeist werden. Dies hat den Vorteil, dass die Hohlleiterauslegung wesentlich unabhängiger von der Geometrie des Sensorelements 12 beziehungsweise der Rolle 14 ist. Im Falle mehrerer Einzelantennen wird die Auswertung einzeln, gruppenweise oder gemeinsam durchgeführt.

Die Hohlleiterantenne 30 weist Öffnungen 32 oder Schlitze auf, an denen das Hochfrequenzsignal abgestrahlt wird. Die Anzahl, Geometrie und Anordnung der Öffnungen 32 werden in einem Antennendesign festgelegt, um die Anwesenheit von Objekten möglichst zuverlässig zu erkennen. Je nachdem, ob das Sensorelement 12 rotiert oder nicht, genügen Öffnungen 32 an der Oberseite oder sollten vorzugsweise Öffnungen 32 über den gesamten Umfang verteilt werden.

Eine Hohlleiterantenne 30 zeichnet sich durch das Komplementär zu einem Dipol aus, d.h. das strahlende Element ist nicht der metallische Dipol, sondern die Unterbrechung der metallischen Fläche durch einen Schlitz. Dieser Schlitz ist im einfachsten Fall λ/2 lang. Durch die Anordnung von mehreren Schlitzen entlang eines Hohlleiters im Abstand von λ/2 kann ein Antennendiagramm wie ein Dipolarray erzeugt werden. Der Vorteil ist jedoch, dass das Speisenetzwerk bereits integriert ist.

Das durch die Öffnungen 32 abgestrahlte Hochfrequenzsignal wird an Objekten zumindest teilweise reflektiert. Je größer der Sprung der Dielektrizitätskonstante zwischen Luft und Objekt ist, desto mehr Leistung wird reflektiert, und entsprechend viel Leistung kommt wieder im Empfänger an. Die Veränderung des eingespeisten Hochfrequenzsignals wird in der Reflexionsanordnung gemäß Figur 3 am Antenneneingang ausgewertet.

Figur 4 zeigt eine Blockdarstellung einer erfindungsgemäßen Ausführungsform des Sensors 10.

Die Antenne 20 ist hier dadurch realisiert, dass insbesondere metallische Antennenstrukturen 34 an der Oberfläche des Sensorelements 12 angeordnet werden. An der Oberfläche kann bedeuten, dass die Antennenstrukturen 34 auf der Oberfläche liegen und damit im Falle der Integration in eine Rolle 14 in direkten Kontakt mit Objekten kommen. Es ist aber auch denkbar, die Antennenstrukturen unter der Oberfläche anzubringen, also beispielsweise noch eine dielektrische Schicht aus einem schützenden Material vorzusehen. Analog der Hohlleiterantenne 30 kann auch eine Antenne 20 mit Antennenstrukturen 34 erfindungsgemäß wie in Figur 1 in eine Rolle 14 integriert, wie im Vergleichsbeispiel in Figur 2 zwischen Rollen 14 oder wie später noch anhand des Vergleichsbeispiels der Figur 5 und 6 illustriert, an der Rollenbahn 16 angeordnet und insbesondere in deren Rahmen 22 integriert sein.

Im Unterschied zu Figur 3 ist der Sensorkopf 18 ebenfalls in das Sensorelement 12 und insbesondere die Rolle 14 integriert dargestellt. Außerdem sind Sender 24 und Empfänger 26 zu einem Transceiver zusammengefasst. Diese Variationen sind aber austauschbar und sowohl mit einer Hohlleiterantenne 30 als auch Antennenstrukturen 34 auf der Oberfläche möglich.

Über die Antennenstrukturen 34 kann ein Hochfrequenzsignal in den Freiraum abgestrahlt werden. Erfindungsgemäß geeignet sind Patchantennen mit oder ohne Reflektor. Die Patches können separat über mehrere Speisepunkte angesteuert werden oder über ein Speisenetzwerk miteinander verbunden werden, so dass ein gemeinsamer Speisepunkt besteht. Jede Zwischenform, also dass Gruppen von Patches zusammengefasst werden, ist ebenso möglich. Die eingezeichneten Verbindungslinien der Antennenstrukturen 34 sind also nur symbolisch zu verstehen. Für die Verteilung der Antennenstrukturen 34 in Bezug auf Anzahl, Anordnung in Längs- und Umfangsrichtung sowie Geometrie gilt praktisch das Gleiche wie oben zu den Öffnungen 32 einer Hohlleiterantenne 30 beschrieben. Dadurch ergeben sich viele Freiheitsgrade für ein optimales Antennendesign. Beispielsweise werden Antennenstrukturen 34 gleichmäßig über die Länge und den Umfang des Sensorelements 12 oder der Rolle 14 verteilt. Das sich ergebende Antennendiagramm ist dann quasi rund über den Umfang der Antenne, bündelt jedoch entlang der Achse.

Während bei den bisher dargestellten Ausführungsformen und Vergleichsbeispielen die Antenne 20 in eine Rolle 14 integriert oder zwischen Rollen 14 angeordnet war, zeigen Figur 5 und 6 weitere Vergleichsbeispiele mit Integration der Antenne 20 in den Rahmen 22 der Rollenbahn 16. Denkbar wäre auch, die Antenne 20 außerhalb des Rahmens 22 neben der Rollenbahn 16 unterzubringen, also beispielsweise seitlich, unterhalb oder oberhalb der Rollenbahn 16. Aufbau und Detektionsprinzip der Antennen 20 entsprechen in dieser Anordnung dem, was zu Figur 3 und Figur 4 ausgeführt wurde. Insbesondere ist also eine Auslegung als Hohlleiterantenne mit Öffnungen 32 wie in Figur 5 gezeigt oder mit Antennenstrukturen 34 wie in Figur 6 gezeigt möglich, ebenso wie der Sensorkopf 18 mit integriert sein kann oder nicht oder Sender 24 und Empfänger 26 zu einem Transceiver zusammengefasst werden können.

Objekte werden nur detektiert, wenn sie sich in den Antennenkeulen 36 befinden. Da die Detektion nicht überall an der Rollenbahn 16 notwendig ist, reicht es aus, die Öffnungen 32 oder Antennenstrukturen 34 auf die Abschnitte zu beschränken, wo eine Information über Objekte erfasst werden soll. Die Speisung einzelner Hohlleiterantennen oder Antennenstrukturen 34 kann durch Kabel oder einen gemeinsamen Hohlleiter umgesetzt werden, der parallel zur Rollenbahn angeordnet oder in den Rahmen 22 integriert wird.

Zur Auswertung in allen bisher beschriebenen Ausführungsformen und Vergleichsbeispielen können die Reflexionen oder Echos des Hochfrequenzsignals genutzt werden, die ein Sprung in der Dielektrizitätskonstante zwischen Luft und Objekt erzeugt. Die reflektierte Energie koppelt wieder auf die Antenne 20 und geht leitungsgebunden zum Empfänger 26 und in die Auswertungseinheit 28. Ausgewertet werden kann Amplitude und Phase des empfangenen Hochfrequenzsignals, und zwar absolut, relativ zum abgestrahlten Hochfrequenzsignal oder relativ zu einem Referenzkanal.

Eine einfache Möglichkeit, die Anwesenheit von Objekten festzustellen, ist eine Überwachung, ob überhaupt ein signifikanter Teil des Hochfrequenzsignals reflektiert wurde. Die Bewertung kann jeweils durch eine Schwellbewertung erfolgen, wobei die Schwelle im Kontext der gewünschten Empfindlichkeit des Systems, etwa ob kleine Objekte wie Briefe erkannt werden sollen, und der Störeinflüsse wie Verschmutzung, Feuchtigkeit und EMV gewählt wird. Diese Schwelle kann das zeitabhängige Hochfrequenzsignal bewerten oder einen summarischen Koeffizienten wie den Reflexionsfaktor. Denkbar ist weiterhin ein Vergleich mit einem Referenzkanal oder einem vorgespeicherten Referenzsignal, da fast immer eine Teilreflexion unabhängig von Objekten durch Teile des Sensors 10, der Rollenbahn 16 oder sonstiger Aufbauten verursacht wird.

Aus der zeitlichen Position der reflektierten Signalanteile innerhalb des Hochfrequenzsignals kann die Auswertungseinheit 28 nicht nur binär auf die Anwesenheit von Objekten schließen, sondern über ein Signallaufzeitverfahren auch den Abstand des Objekts von der Antenne 20 und damit die Objektposition bestimmen. So kann zumindest die Position der vordersten Kante eines Objekts erfasst werden. Bei der Bestimmung der Position hinterer Kanten eines Objekts, welche eine Größeninformation über das Objekt liefern, oder weiterer Objekte auf demselben Sensorelement 12 ist zu beachten, dass hier das anwesende Objekt die Signalausbreitung bereits verzögert. Deshalb kann die hintere Kante nur grob geschätzt oder anhand von Wissen oder Annahmen über die Dielektrizitätskonstante des Objekts bestimmt werden. Dadurch, dass das Hochfrequenzsignal durch nicht metallische Objekte transmittiert wird, können auch mehrere Objekte in unterschiedlichem Abstand zur Antenne 20, identifiziert werden, auch wenn sie sich optisch verdecken. Aus den genannten Gründen der Signalverzögerung wird dabei nicht unbedingt eine exakte Objektposition hinterer Objekte, zumindest aber die für sich wertvolle Erkenntnis gewonnen, dass mehrere Objekte auf demselben Sensorelement 12 anwesend sind.

Für die Bestimmung der Signallaufzeiten wird das Hochfrequenzsignal in Amplitude, Frequenz und/oder Phase moduliert. Eine Amplitudenmodulation mit 0% und 100% entspricht einer Pulsmodulation, wobei die Amplitude aber nicht notwendig pulsförmig moduliert wird, solange nur ein eindeutiges Zeitverhalten ablesbar bleibt, wie beispielsweise bei Mehrfachpulsen oder Sprungfunktionen. Eine Phasenmodulation ermöglicht die Bestimmung der Phasenverschiebung zwischen ausgesandtem und empfangenem Hochfrequenzsignal. Ein Beispiel für ein Verfahren mit Frequenzmodulation ist FMCW.

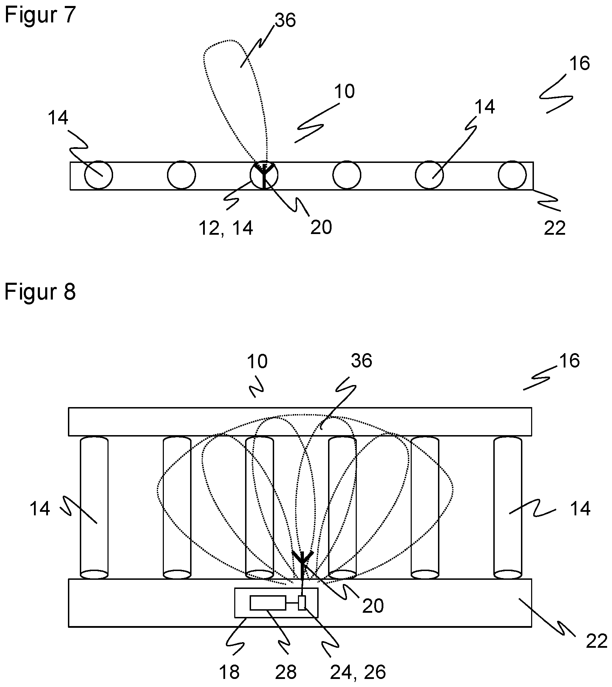

Eine alternative oder zusätzliche Auswertung ist eine Dopplermessung. Dies setzt voraus, dass die Antennenkeulen 36 zumindest eine Komponente in Bewegungsrichtung der Objekte auf der Rollenbahn 16 aufweisen. Figur 6 illustriert, wie der Dopplereffekt durch Schrägstellen der Antennenkeulen 36 verbessert genutzt werden kann. Figur 7 zeigt dies in einer Schnitt- oder Seitenansicht für den Fall einer Antenne 20, die in eine Rolle 14 integriert oder zwischen Rollen 14 angeordnet ist. Für eine Dopplermessung optimal wäre eine Ausrichtung der Antennenkeulen 36 genau in Bewegungsrichtung. Ansonsten teilt sich die Antennenkeule 36 in eine Komponente auf die Antenne 20 zu beziehungsweise von ihr weg, die genutzt werden kann, und eine Komponente senkrecht dazu, die zu der Dopplerauswertung nichts beiträgt.

Unter den genannten Voraussetzungen ergibt sich durch die Bewegung des Objekts eine Dopplerverschiebung, die umso deutlicher gemessen werden kann, je größer die Geschwindigkeitskomponente in Richtung der Antenne 20 ist. Von der Antenne 20 wird in einem einfachen Beispiel ein Hochfrequenzsignal einer konstanten Frequenz abgestrahlt. Der Empfänger wertet den Unterschied zwischen gesendeter und empfangener Frequenz aus. Die Differenzfrequenz kann in die Geschwindigkeit des Objekts auf der Rollenbahn 16 umgerechnet werden. Bei einem Frequenzgemisch tritt der Dopplereffekt ebenso auf, lediglich die Auswertung wird etwas aufwändiger.

Figur 8 zeigt eine weitere Ausführungsform mit einer Antenne 20, deren Antennenkeule 36 nach Art eines abtastenden Radars verschwenkt werden kann, um so zyklisch einen größeren Bereich der Rollenbahn 16 zu erfassen. Obwohl die Schwenkbewegung prinzipiell durch mechanische Bewegung der Antenne 20 erzielt werden kann, geschieht dies vorzugsweise durch intelligente Ansteuerung mehrerer Einzelantennen, insbesondere Patches einer Antennenstruktur 34 per Phaseshifting oder durch gleichzeitige Ansteuerung jedoch mit unterschiedlichen Hochfrequenzsignalen beziehungsweise Phasen. Prinzipiell kann eine solche schwenkbare Antenne 20 auch in eine Rolle 14 integriert oder zwischen Rollen 14 angeordnet werden, aber bei einer Anordnung an der Rollenbahn 16 wie in Figur 8 zeigt sich der Vorteil eines größeren Erfassungsbereichs deutlicher.

Abschließend wird erneut darauf hingewiesen, dass die in den Figuren gezeigten Merkmale auch anders kombiniert werden können. So ist nicht nur jeweils möglich, das Sensorelement 12 wie in der Erfindung in die Rolle 14 zu integrieren, wie in einem Vergleichsbeispiel zwischen Rollen 14 oder an der Rollenbahn 16 anzuordnen, Sender 24 und Empfänger 26 zu einem Transceiver zusammenzufassen, in das Sensorelement 12, die Rolle 14 oder den Rahmen 22 zu integrieren oder in Reflexion oder Transmission anzuordnen. Es sind auch Kombinationen von Messprinzipien denkbar, also Sensoren 10 mit verschiedenen hier vorgestellten Antennenbauformen, Antennenanordnungen oder Antennendesigns, aber auch zusätzliche Sensoren in Rollen 14 oder nicht, die auf nicht abgestrahlten Hochfrequenzsignalen oder ganz anderen physikalischen Prinzipien wie optischer oder kapazitiver Detektion basieren.

In einer Ausführung der Erfindung weist die Auswertungseinheit (28) mindestens zwei der folgenden Einheiten auf: eine Vorverarbeitung, ein Filter, um störende Einflüsse zu unterdrücken, einen adaptiven Detektor, einen Tracker.

In weiterer Ausführungsform weist das Sensorelement (12) getrennt gespeiste Antennenelemente (20) für Sender und Empfänger auf und es kann weiter mehr als ein Antennenelement (20) aufweisen, dessen Detektionsergebnisse in der Auswerteeinheit (28) miteinander verknüpft werden.

## Patentansprüche

1. Rolle (14) mit einem Sensor (10) für eine Rollenbahn (16), wobei der Sensor (10) einen Sender (24), einen Empfänger (26), ein Sensorelement (12), das in die Rolle (14) integriert ist, und eine Auswertungseinheit (28) zum Erkennen von auf der Rollenbahn (16) befindlichen Objekten anhand eines Sensorsignals des Sensorelements (12), umfasst, wobei das Sensorelement (12) ein Antennenelement (20) aufweist, wobei das Sensorsignal ein von dem Sender (24) in das Antennenelement (20) eingespeistes, abgestrahltes und anschließend über das Antennenelement (20) in dem Empfänger (26) wieder empfangenes Hochfrequenzsignal ist und wobei die Auswertungseinheit (28) dafür ausgebildet ist, die Anwesenheit von Objekten anhand von Beeinflussungen des Hochfrequenzsignals zu erkennen,
**dadurch gekennzeichnet,**
**dass** das Antennenelement (20) ausgestaltet ist als mehrere über den Umfang des Sensorelements (12) verteilte Antennenstrukturen (34) an der Oberfläche des Sensorelements (12), wobei die Antennenstrukturen (34) mindestens eine Patchantenne aufweisen.

2. Rolle (14) nach Anspruch 1,
wobei die Auswertungseinheit (28) dafür ausgebildet ist, Objekte anhand von Reflexionen des Hochfrequenzsignals zu erkennen.

3. Rolle (14) nach Anspruch 1 oder 2,
wobei die Auswertungseinheit (28) dafür ausgebildet ist, eine Signallaufzeit des Hochfrequenzsignals bis zu einer Objektkante und daraus die Lage eines erkannten Objekts auf der Rollenbahn (16) zu bestimmen.

4. Rolle (14) nach einem der vorhergehenden Ansprüche,
wobei die Auswertungseinheit (28) dafür ausgebildet ist, die Amplitude, Frequenz und/oder Phase des Hochfrequenzsignals sendeseitig zu modulieren und diese Modulation empfangsseitig auszuwerten.

5. Rolle (14) nach einem der vorhergehenden Ansprüche,
wobei das Antennenelement (20) das Hochfrequenzsignal zumindest mit einem Anteil in einer Bewegungsrichtung der Objekte auf der Rollenbahn (16) abstrahlt und die Auswertungseinheit (28) dafür ausgebildet ist, die Objekte anhand einer geänderten Frequenz des Hochfrequenzsignals aufgrund einer Dopplerverschiebung zu erfassen.

6. Rolle (14) nach einem der vorhergehenden Ansprüche,
wobei die Auswertungseinheit (28) dafür ausgebildet ist, vorab ein Kalibrationssignal in Abwesenheit von Objekten zu bestimmen und dann für die Erkennung von Objekten zu berücksichtigen und insbesondere das Kalibrationssignal im Betrieb anhand einer Historie von Hochfrequenzsignalen zu bestimmen oder anzupassen.

7. Rolle (14) nach einem der vorhergehenden Ansprüche,
wobei die Auswertungseinheit (28) dafür ausgebildet ist, die Verarbeitung des Hochfrequenzsignals im Frequenzbereich durchzuführen.

8. Rolle (14) nach einem der vorhergehenden Ansprüche,
wobei die Auswertungseinheit (28) mindestens zwei der folgenden Einheiten beinhaltet: eine Vorverarbeitung, ein Filter, um störende Einflüsse zu unterdrücken, einen adaptiven Detektor, einen Tracker.

9. Rolle (14) nach einem der vorhergehenden Ansprüche,
wobei das Sensorelement (12) mehr als ein Antennenelement (20) aufweist, dessen Detektionsergebnisse in der Auswerteeinheit (28) miteinander verknüpft werden.

10. Verfahren zum Erkennen von auf einer Rollenbahn (16) befindlichen Objekten durch Auswertung eines Sensorsignals eines Sensorelements (12), das in eine Rolle (14) der Rollenbahn (16) integriert ist, wobei ein Hochfrequenzsignal in ein Antennenelement (20) des Sensorelements (12) eingespeist, abgestrahlt und anschließend über das Antennenelement (20) wieder empfangen wird, um die Anwesenheit von Objekten anhand von Beeinflussungen des Hochfrequenzsignals zu erkennen,
**dadurch gekennzeichnet,**
**dass** das Antennenelement ausgestaltet ist als mehrere über den Umfang des Sensorelements (12) verteilte Antennenstrukturen (34) an der Oberfläche des Sensorelements (12),), wobei die Antennenstrukturen (34) mindestens eine Patchantenne aufweisen.

## Claims

1. A roller (14) with a sensor (10) for a roller track (16), the sensor (10) comprising a transmitter (24), a receiver (26), a sensor element (12) which is integrated into the roller (14), and an evaluation unit (28) for detecting objects located on the roller track (16) using a sensor signal of the sensor element (12), wherein the sensor element (12) has an antenna element (20), wherein the sensor signal is a high frequency signal fed into the antenna element (20) by the transmitter (24), irradiated, and subsequently again received in the receiver (26) via the antenna element (20), and wherein the evaluation unit (28) is configured to detect the presence of objects with reference to influences of the high frequency signal,
**characterized in that** the antenna element (20) is configured as several antenna structures (34) distributed over the circumference of the sensor element (12) at the surface of the sensor element (12), wherein the antenna structures (34) comprise at least one patch antenna.

2. The roller (14) in accordance with claim 1,
wherein the evaluation unit (28) is configured to detect objects with reference to reflections of the high frequency signal.

3. The roller (14) in accordance with claim 1 or 2,
wherein the evaluation unit (28) is configured to determine a signal transit time of the high frequency signal up to an object edge and to determine the position of a detected object on the roller track (16) from this.

4. The roller (14) in accordance with any of the preceding claims,
wherein the evaluation unit (28) is configured to modulate at least one of the amplitude, frequency and phase of the high frequency signal at the transmission side and to evaluate this modulation at the reception side.

5. The roller (14) in accordance with any of the preceding claims,
wherein the antenna element (20) irradiates the high frequency signal with at least a portion in a direction of movement of the objects on the roller track (16), and wherein the evaluation unit (28) is configured to detect the objects with reference to a modified frequency of the high frequency signal on the basis of a Doppler shift.

6. The roller (14) in accordance with any of the preceding claims,
wherein the evaluation unit (28) is configured to determine a calibration signal in the absence of objects in advance and then to take it into account for the detection of objects, in particular to determine or to adapt the calibration signal in operation on the basis of a history of high frequency signals.

7. The roller (14) in accordance with any of the preceding claims,
wherein the evaluation unit (28) is configured to carry out the processing of the high frequency signal in the frequency domain.

8. The roller (14) in accordance with any of the preceding claims,
wherein the evaluation unit (28) includes at least two of the following units: a pre-processing, a filter to suppress interfering influences, an adaptive detector, a tracker.

9. The roller (14) in accordance with any of the preceding claims,
wherein the sensor element (12) has more than one antenna element (20) whose detection results are linked to one another in the evaluation unit (28).

10. A method of detecting objects located on a roller track (16) by evaluating a sensor signal of a sensor element (12) which is integrated into a roller (14) of the roller track(16), wherein a high frequency signal is fed into an antenna element (20) of the sensor element (12), is irradiated, and is subsequently again received via the antenna element (20) to detect the presence of objects on the basis of influences of the high frequency signal,
**characterized in that** the antenna element (20) is configured as several antenna structures (34) distributed over the circumference of the sensor element (12) at the surface of the sensor element (12), wherein the antenna structures (34) comprise at least one patch antenna.

## Revendications

1. Rouleau (14) comportant un capteur (10) pour une voie à rouleaux (16), le capteur (10) comportant un émetteur (24), un récepteur (26), un élément capteur (12) qui est intégré dans le rouleau (14), et une unité d'évaluation (28) pour reconnaître des objets situés sur la voie à rouleaux (16) à l'aide d'un signal de capteur de l'élément capteur (12), l'élément capteur (12) comprenant un élément antenne (20), le signal de capteur étant un signal haute fréquence injecté par l'émetteur (24) dans l'élément antenne (20), rayonné et ensuite reçu dans le récepteur (26) via l'élément antenne (20), et l'unité d'évaluation (28) étant réalisée pour reconnaître la présence d'objets à l'aide d'influences du signal haute-fréquence,
**caractérisé en ce que**
l'élément antenne (20) est conçu sous forme de plusieurs structures d'antenne (34) réparties sur la périphérie de l'élément capteur (12) sur la surface de l'élément capteur (12), les structures d'antenne (34) présentant au moins une antenne patch.

2. Rouleau (14) selon la revendication 1,
dans lequel l'unité d'évaluation (28) est conçue pour reconnaître des objets à l'aide de réflexions du signal haute-fréquence.

3. Rouleau (14) selon la revendication 1 ou 2,
dans lequel l'unité d'évaluation (28) est réalisée pour déterminer un temps de parcours du signal haute-fréquence jusqu'à une arête de l'objet et pour en déterminer la position d'un objet reconnu sur la voie à rouleaux (16).

4. Rouleau (14) selon l'une des revendications précédentes,
dans lequel l'unité d'évaluation (28) est réalisée pour moduler l'amplitude, la fréquence et/ou la phase du signal haute-fréquence du côté émission et pour évaluer cette modulation du côté réception.

5. Rouleau (14) selon l'une des revendications précédentes,
dans lequel l'élément antenne (20) rayonne le signal haute-fréquence au moins avec une part dans la direction de mouvement des objets sur la voie à rouleaux (16) et l'unité d'évaluation (28) est réalisée pour détecter les objets à l'aide d'une fréquence modifiée du signal haute-fréquence due à un décalage Doppler.

6. Rouleau (14) selon l'une des revendications précédentes,
dans lequel l'unité d'évaluation (28) est réalisée pour déterminer préalablement un signal de calibration en absence d'objets et pour le prendre alors en compte pour la reconnaissance d'objets et pour déterminer ou adapter en particulier le signal de calibration pendant le fonctionnement à l'aide d'un historique de signaux haute-fréquence.

7. Rouleau (14) selon l'une des revendications précédentes,
dans lequel l'unité d'évaluation (28) est réalisée pour mettre en oeuvre le traitement du signal haute-fréquence dans la plage de la fréquence.

8. Rouleau (14) selon l'une des revendications précédentes,
dans lequel l'unité d'évaluation (28) comprend au moins deux des unités suivantes : un prétraitement, un filtre pour supprimer des influences perturbatrices, un détecteur adaptatif, un traceur.

9. Rouleau (14) selon l'une des revendications précédentes,
dans lequel l'élément capteur (12) comprend plus d'un élément antenne (20) dont les résultats de détection sont chaînés entre eux dans l'unité d'évaluation (28).

10. Procédé pour reconnaître des objets situés sur une voie à rouleaux (16) par évaluation d'un signal de capteur d'un élément capteur (12) qui est intégré dans un rouleau (14) de la voie à rouleaux (16), dans lequel un signal haute fréquence est injecté dans un élément antenne (20) de l'élément capteur (12), il est rayonné et ensuite reçu via l'élément antenne (20), afin de reconnaître la présence d'objets à l'aide d'influences du signal haute-fréquence,
**caractérisé en ce que**
l'élément antenne est conçu sous forme de plusieurs structures d'antenne (34) réparties sur la périphérie de l'élément capteur (12) sur la surface de l'élément capteur (12), les structures d'antenne (34) présentant au moins une antenne patch.
